# EUROPEAN PATENT APPLICATION

(11) **EP 1 950 958 A2**
(43) Date of publication of application: **30.07.2008**
(21) Application number: 08100611.6
(22) Date of filing: 17.01.2008
(51) Int. Cl.: H04N 5/445

(54) **Display apparatus and control method thereof**

(30) Priority: 24.01.2007 KR 20070007465
(71) Applicant: Samsung Electronics Co., Ltd., Suwon-si Gyeonggi-do 443-742 (KR)
(72) Inventor: Jeong, Won-sik, Gyeonggi-do (KR)
(74) Representative: Grootscholten, Johannes A.M.

(57) **Abstract**

Disclosed is a display apparatus comprising: a signal input part which receives an image signal including additional information from an external display apparatus; an additional information processor which extracts the additional information from the image signal and stores the additional information; and a controller which controls the additional information processor to extract and output the stored additional information if the image signal is inputted through the signal input part, and controls the additional information processor to renew the stored additional information with the additional information extracted from a changed image signal if the image signal inputted from the external display apparatus is changed.

## Description

### CROSS-REFERENCE TO RELATED APPLICATIONS

This application claims priority from Korean Patent Application No. 10-2007-0007465, filed on January 24, 2007 in the Korean Intellectual Property Office, the disclosure of which is incorporated herein by reference.

### BACKGROUND OF THE INVENTION

### Field of the Invention

Apparatuses and methods consistent with the present invention relate to a display apparatus and a control method thereof, and more particularly, to a display apparatus which receives and displays an image signal having additional information, and a control method thereof.

### Description of the Related Art

Recently, the number of display apparatuses that receives and displays an image signal including additional information, particularly, teletext information increases more and more.

The display apparatus such as a TV receives an image signal including the teletext(hereinafter, to be called "TTX") information from a broadcasting station, and displays the TTX information. The display apparatus processes image information included in the received image signal and displays an image corresponding to the image signal. At the same time, the display apparatus continuously extracts and stores the TTX information from the received image signal. That is, if the image signal includes the TTX information, the display apparatus automatically extracts and stores the TTX information.

Generally, the TTX information includes different types of information to be displayed per page. Currently, the TTX information includes various information from 100 pages to 899 pages. The TTX information varies depending on broadcasting stations which provide it. For example, respective pages of the TTX information provided by Korean Broadcasting System (KBS) may be different from those provided by Seoul Broadcasting System (SBS).

If a user wants to view the TTX information from the display apparatus, he/she manipulates the display apparatus to enter a TTX mode. Then, the display apparatus displays a basic page of prestored TTX information.

The display apparatus may be connected with an external display apparatus to receive an image signal therefrom and display an image corresponding to the received image signal. The display apparatus which supplies an image signal is referred to as a master display apparatus while the display apparatus which receives the image signal from the master display apparatus is called a slave display apparatus.

If the image signal transmitted by the master display apparatus includes the TTX information, the slave display apparatus extracts and stores the TTX information from the image signal and continuously displays the TTX information according to a user's command. If the image signal is changed in accordance with the change of the channel of the master display apparatus, the slave display apparatus receives the changed image signal corresponding thereto.

However, the TTX information stored in the conventional slave display apparatus is not renewed even if the master display apparatus transmits the changed image signal including new TTX information. Thus, it causes a problem that the new TTX information included in the changed image signal collides with the old TTX information stored in the slave display apparatus.

### SUMMARY

Accordingly, it is an aspect of the present invention to provide a display apparatus which renews an old TTX information with a changed new TTX information if the image signal including TTX information transmitted from an external display apparatus is changed, in case of receiving an image signal including TTX information from an external display apparatus and displaying an image, and a control method thereof.

Additional aspects and/or advantages of the present invention will be set forth in part in the description which follows and, in part, will be obvious from the description, or may be learned by practice of the present invention.

The foregoing and/or other aspects of the present invention can be achieved by providing a display apparatus, comprising: a signal input part which receives an image signal including an additional information from an external display apparatus; an additional information processor which extracts the additional information from the image signal and stores the additional information; and a controller which controls the additional information processor to extract and output the stored additional information if the image signal is inputted through the signal input part, and controls the additional information processor to renew the stored additional information with the additional information extracted from a changed image signal if the image signal inputted from the external display apparatus is changed.

In accordance with another aspect of the present invention, the controller determines whether a synchronous signal is inputted together with the image signal, and counts a non-signal time during which the synchronous signal is not inputted if the synchronous signal is not inputted.

In accordance with another aspect of the present invention, the controller determines that the inputted image signal is changed and renews the additional information corresponding to the changed image signal if the non-signal time does not exceed predetermined time.

In accordance with another aspect of the present invention, the control part controls the processor not to output the additional information if the additional information is renewed.

In accordance with another aspect of the present invention, the control part determines that the image signal is not inputted from the external display apparatus if the non-signal time exceeds the predetermined time.

In accordance with another aspect of the present invention, the additional information comprises teletext (TTX) information.

In accordance with another aspect of the present invention is provided a method of controlling a display apparatus, comprising: receiving an image signal including additional information from an external display apparatus; extracting the additional information from the received image signal and storing the additional information; displaying the stored additional information; determining whether the image signal inputted from the external display apparatus is changed; and renewing the stored additional information with the additional information extracted from the changed image signal if the image signal is changed.

In accordance with another aspect of the present invention, the determining whether the image signal inputted from the external display apparatus is changed comprises determining whether a synchronous signal is inputted together with the image signal and counting a non-signal time during which the synchronous signal is not inputted if the synchronous signal is not inputted.

In accordance with another aspect of the present invention, if the non-signal time does not exceed predetermined time, it is determined that the inputted image signal is changed.

In accordance with another aspect of the present invention, the additional information is not outputted if the additional information is renewed.

In accordance with another aspect of the present invention, if the non-signal time exceeds the predetermined time, it is determined that the image signal is not inputted from the external display apparatus.

In accordance with another aspect of the present invention, the additional information comprises teletext (TTX) information.

### BRIEF DESCRIPTION OF THE DRAWINGS

The above and/or other aspects and advantages of the present invention will become apparent and more readily appreciated from the following description of the embodiments, taken in conjunction with the accompany drawings of which:
FIG. 1 is a control block diagram of a display apparatus according to an exemplary embodiment of the present invention; and
FIG. 2 is a flowchart to control the display apparatus according to the exemplary embodiment of the present invention.

### DETAILED DESCRIPTION OF EXEMPLARY EMBODIMENTS

Hereinafter, exemplary embodiments of the present invention will be described with reference to accompanying drawings, wherein like numerals refer to like elements and repetitive descriptions will be avoided as necessary.

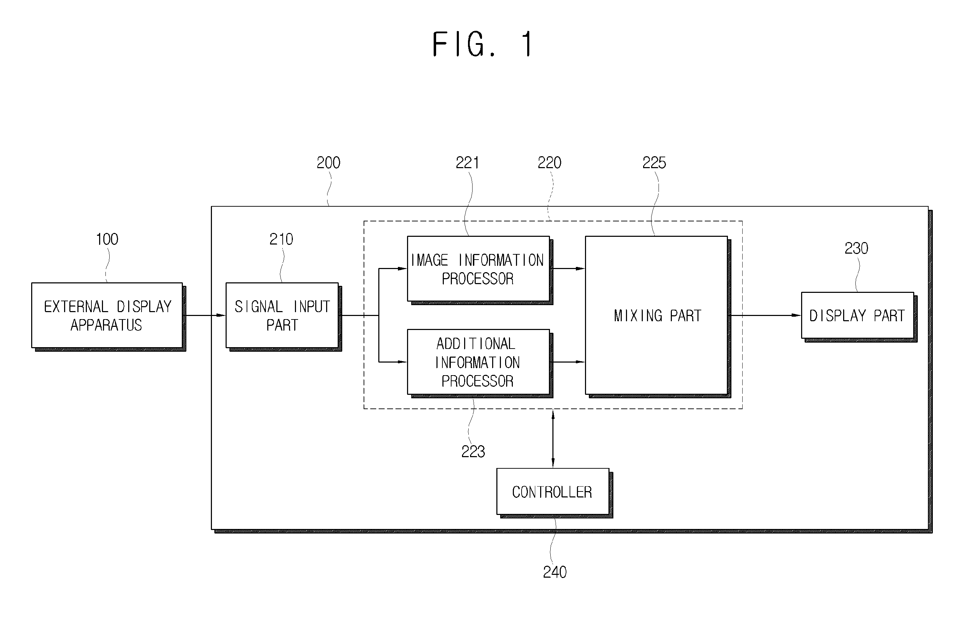

FIG. 1 is a control block diagram of a display apparatus according to an exemplary embodiment of the present invention. As shown therein, a display apparatus 200 according to the exemplary embodiment of the present invention includes a signal input part 210, a processor 220, a display part 230 and a controller 240.

The display apparatus 200 according to the exemplary embodiment of the present invention may include a TV or a set-top box. Here, the display apparatus 200 according to the exemplary embodiment of the present invention includes TV.

The signal input part 210 according to the exemplary embodiment of the present invention receives an image signal including additional information from an external display apparatus 100. The signal input part 210 may include a tuner to receive a broadcasting signal and a connector (not shown) to be connected with the external display apparatus 100.

As an example of the present invention, the additional information includes teletext (hereinafter, to be called "TTX") information. Here, the TTX information includes text information such as news headlines, weather, movies, flights and stocks.

The display apparatus 200 is connected with external devices 100 (e.g. VCR and DVDR) through the connector of the signal input part 210 to receive the image signal. Preferably, the connector includes various connectors to receive image signals with various formats. For example, the connector may include a D-sub connector, a composite video broadcast signal (CVBS) connector, an S-video connector and a component connector to receive the image signal.

The display apparatus 200 according to the exemplary embodiment of the present invention is connected with the external display apparatus 100 and receives the image signal therefrom. The external display apparatus 100 may receive a broadcasting signal including the TTX information through a tuner provided therein and supplies the received broadcasting signal to the connected display apparatus 200.

The processor 220 processes the image signal inputted through the signal input part 210. As shown in FIG. 1, the processor 220 according to the exemplary embodiment of the present invention may include an image information processor 221, and an additional information processor 223 for processing the TTX information.

The image information processor 221 processes image information of the image signal inputted through the signal input part 210 and outputs the image information according to a control of the controller 240. The image information processor 221 may include various functions corresponding to the formats of the inputted image signal. For example, the image information processor 221 may have an A/D conversion function to convert various inputted image signals into digital image signals, a digital encoding function to compress the image signal inputted from external devices, a scaling function to receive digital image signals and/or analog image signals and to scale a vertical frequency, resolution, picture ratio, etc. of digital image signals and/or analog image signals corresponding to satisfy an output standard of the display part 230, and a predetermined formation conversion function. The TTX processor 223 extracts the TTX information from the image signal inputted through the signal input part 210 and stores it in a predetermined buffer. That is, the TTX processor 223 determines whether the inputted image signal has the TTX information, and extracts and stores the TTX information if it is determined that the TTX information is included in the image signal. The TTX processor 223 may extract the TTX information from the image signal to output it or may output the TTX information previously stored in the buffer according to a control of the controller 240.

The display apparatus 200 according to the exemplary embodiment of the present invention may include a demultiplexer (not shown) which divides the image signal inputted through the signal input part 210 into image information, video information and additional information having the TTX information and transmits the image information to the image signal processor 220, and the TTX information to the TTX processor 223.

A mixing part 225 processes an image corresponding to the image information processed by the image information processor 221 and an image corresponding to the TTX information processed by the TTX processor 223, to be displayed on the display part 230. The mixing part 225 may process a TTX page such as a basic page of the TTX information to be displayed on the display part 230 as a user manipulates to enter into the TTX mode.

The processor 220 may further include a UI generator (not shown) which generates a user interface image corresponding to the TTX information outputted by the TTX processor 223. The UI generator may display an image corresponding to the TTX information on a certain part of the image of the image information outputted by the image signal processor 220.

The display part 230 displays the image corresponding to the image signal processed by the processor 220. The display part 230 may include a liquid crystal display (LCD), a plasma display panel (PDP), etc.
The controller 240 controls to display the TTX information included in the image signal inputted from the external display apparatus 100 through the signal input part 210 and renew the TTX information if the inputted image signal is changed. The controller 240 may include a central processing unit (CPU) and a microcomputer.

More specifically, the controller 240 determines whether the inputted image signal includes the TTX information if the image signal is inputted from the external display apparatus 100 through the signal input part 210. As described above, the TTX processor 223 may determine whether the image signal includes the TTX information.

If the inputted image signal includes the TTX information, the controller 240 controls the processor 220 to divide the image signal into the image information and the TTX information and process them respectively.

If a user commands to display the TTX information, the controller 240 controls to enter into the TTX mode and controls the TTX processor 223 to extract the TTX information stored in the predetermined buffer and display the information on the display part 230.

If the image signal is inputted, the controller 240 continuously determines whether a synchronous signal, particularly a vertical synchronous signal is inputted together with the image signal. The controller 240 may determine whether the image signal is inputted by checking the vertical synchronous signal.

If the controller 240 determines that the vertical synchronous signal is not inputted, the controller 240 counts non-signal time during which the vertical synchronous signal is not inputted. If the channel is changed or if the inputted image signal is unstable, the vertical synchronous signal is not inputted from the external display apparatus 100.

If the counted non-signal time exceeds predetermined time, the controller 240 determines that the image signal is not inputted from the external display apparatus 100.

If the non-signal time does not exceed the predetermined time, i.e., if the vertical synchronous signal is inputted again, the controller 240 determines that the image signal inputted by the external display apparatus 100 is changed. Then, the controller 240 controls to renew the TTX information stored in the buffer and display the renewed TTX information on the display part 230. The controller 240 determines whether the changed image signal includes the TTX information. If the changed image signal includes the TTX information, the controller 240 controls to remove the old TTX information stored in the buffer, and store the new TTX information included in the changed image signal instead.

If the changed image signal does not include the TTX information, the controller 240 ends the TTX mode and controls not to display the TTX information on the display part 230.

The controller 240 may control the TTX processor 223 not to output the TTX information if the TTX information has been renewed as the image signal inputted from the external display apparatus 100 is changed. Then, transient phenomena such as noise may not occur while the TTX information is renewed.

If the image signal inputted by the external display apparatus 100 is changed, the previous TTX information stored in the buffer is renewed with the new TTX information included in the changed image signal to display the new TTX information without errors.

The controller 240 checks the vertical synchronous signal and determines whether the image signal inputted from the external display apparatus 100 is changed. The controller 240 may renew the TTX information if it is determined that the inputted image signal is changed.

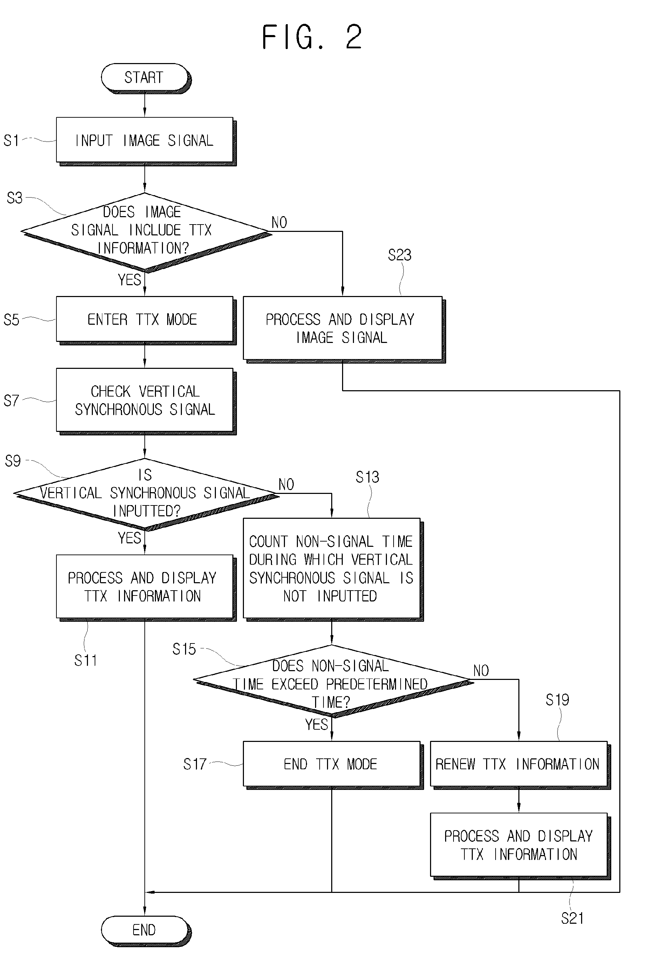

A method of controlling the display apparatus 200 according to the exemplary embodiment of the present invention will be described with reference to FIG. 2.

As shown therein, if the image signal is inputted from the external display apparatus 100 (S1), the controller 240 determines whether the inputted image signal includes the TTX information (S3).

If it is determined at the step of S3 that the TTX information is not included in the inputted image signal, the controller 240 controls the processor 220 to process the inputted image signal and display the image corresponding thereto (S23).

If it is determined at the step of S3 that the TTX information is included in the inputted image signal, the controller 240 controls the processor 220 to enter into the TTX mode and display the TTX information on the display part 230 (S5). Here, the TTX mode may be entered automatically, or by a user's command.

Then, the controller 240 determines whether the vertical synchronous signal is inputted together with the image signal (S7).

If the vertical synchronous signal is continuously inputted (S9), the controller 240 controls the processor 220 to display the TTX information on the display part 230 (S11).

If the vertical synchronous signal is not continuously inputted at the step of S9, the controller 240 counts the non-signal time during which the vertical synchronous signal is not inputted (S13).

Then, the controller 240 determines whether the non-signal time exceeds the predetermined time (S15).

If it is determined at the step of S15 that the non-signal time exceeds the predetermined time, the controller 240 determines that the image signal is not inputted and ends the TTX mode (S17).

If it is determined at the step of S15 that the non-signal time does not exceeds the predetermined time, the controller 240 determines that the changed image signal is inputted from the external display apparatus 100 and renews the old TTX information with the new one corresponding to the changed image signal (S19). Then, the renewed TTX information is displayed on the display part 230 (S21).

If the image signal inputted from the external display apparatus 100 is changed, the old TTX information stored in the buffer is renewed with the TTX information included in the changed image signal, thereby displaying the TTX information without errors.

The TTX information can be renewed correctly by checking, using the vertical synchronous signal, whether the image signal inputted from the external display apparatus 100 is changed.

As described above, the present invention provides a display apparatus which renews TTX information stored in a buffer with TTX information included in a changed image signal if the image signal inputted from an external display apparatus is changed, and displays the TTX information without errors, and a control method thereof.

Also, the present invention provides a display apparatus which checks a vertical synchronous signal and determines whether an image signal inputted from an external display apparatus is changed and renews the TTX information, and a control method thereof.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display apparatus, comprising:
a signal input part which receives an image signal including additional information from an external display apparatus;
an additional information processor which extracts the additional information from the image signal and stores the additional information; and
a controller which controls the additional information processor to extract and output the stored additional information if the image signal is inputted through the signal input part, and controls the additional information processor to renew the stored additional information with the additional information extracted from a changed image signal if the image signal inputted from the external display apparatus is changed.

2. The display apparatus according to claim 1, wherein the controller determines whether a synchronous signal is inputted together with the image signal, and counts a non-signal time during which the synchronous signal is not inputted if the synchronous signal is not inputted.

3. The display apparatus according to claim 2, wherein the controller determines that the inputted image signal is changed and renews the additional information corresponding to the changed image signal if the non-signal time does not exceed predetermined time.

4. The display apparatus according to claim 1, wherein the controller controls the processor not to output the additional information if the additional information is renewed.

5. The display apparatus according to claim 3, wherein the controller controls the processor not to output the additional information if the additional information is renewed.

6. The display apparatus according to claim 2, wherein the controller determines that the image signal is not inputted from the external display apparatus if the non-signal time exceeds the predetermined time.

7. The display apparatus according to claim 1, wherein the additional information comprises teletext (TTX) information.

8. A method of controlling a display apparatus, comprising:
receiving an image signal including additional information from an external display apparatus;
extracting the additional information from the received image signal and storing the additional information;
displaying the stored additional information;
determining whether the image signal inputted from the external display apparatus is changed; and
renewing the stored additional information with the additional information extracted from the changed image signal if the image signal is changed.

9. The method according to claim 8, wherein the determining whether the image signal inputted from the external display apparatus is changed comprises determining whether a synchronous signal is inputted together with the image signal and counting a non-signal time during which the synchronous signal is not inputted if the synchronous signal is not inputted.

10. The method according to claim 9, wherein if the non-signal time does not exceed predetermined time, it is determined that the inputted image signal is changed.

11. The method according to claim 8, wherein the additional information is not outputted if the additional information is renewed.

12. The method according to claim 10, wherein the additional information is not outputted if the additional information is renewed.

13. The method according to claim 9, wherein if the non-signal time exceeds the predetermined time, it is determined that the image signal is not inputted from the external display apparatus.

14. The method according to claim 8, wherein the additional information comprises teletext (TTX) information.
